# EUROPÄISCHE PATENTSCHRIFT

(11) **EP 1 137 515 B1**
(45) Veröffentlichungstag und Bekanntmachung des Hinweises auf die Patenterteilung: **22.03.2006**
(21) Anmeldenummer: 99966936.9
(22) Anmeldetag: 09.12.1999
(51) Int. Cl.: B24B 49/04, B24B 5/04, B24B 5/14

(54) **VERFAHREN UND SCHLEIFMASCHINE ZUR PROZESSFÜHRUNG BEIM SCHÄLSCHLEIFEN EINES WERKSTÜCKES**
METHOD AND GRINDING MACHINE FOR CONTROLLING THE PROCESS DURING ROUGH GRINDING OF A WORKPIECE
PROCEDE ET RECTIFIEUSE POUR LA COMMANDE DE PROCESSUS LORS DE LA RECTIFICATION D'ECROUTAGE D'UNE PIECE

(30) Priorität: 11.12.1998 DE 19857364
(43) Veröffentlichungstag der Anmeldung: 04.10.2001
(73) Patentinhaber: Erwin Junker Maschinenfabrik GmbH, 77787 Nordrach (DE)
(72) Erfinder: JUNKER, Erwin, D-77815 Bühl/Baden (DE)
(74) Vertreter: Leske, Thomas
(86) Internationale Anmeldenummer: PCT/EP1999/009703
(87) Internationale Veröffentlichungsnummer: WO 2000/035631

(56) Entgegenhaltungen:
- EP-A- 0 562 632
- US-A- 5 347 761
- US-A- 5 371 975
- US-A- 5 773 731

## Beschreibung

Die Erfindung betrifft ein Verfahren zur Prozessführung eines Werkstückes mittels Schleifscheibe auf einer Schleifmaschine und eine Schleifmaschine zur Durchführung des Verfahrens gemäß dem Oberbegriff der Ansprüche 1 und 8. Solche Verfahren und Vorrichtung sind aus US 4 516 212 A bekannt. Beim Rundschleifen durch Schälschleifen taucht die Schleifscheibe sofort bis auf das Fertig-Sollmaß in die Außenkontur des Werkstücks ein, und mit dieser Eindringtiefe wird anschließend in einem Längsschleifvorgang allein durch Axialvorschub das komplette Schleifaufmaß abgetragen. Charakteristisch für das Schälschleifen, das auch als Umfangslängsschleifen bezeichnet wird, ist die schmale Schleifscheibe, die im Wesentlichen mit einer Umfangskante anstelle mit ihrer Umfangsfläche den Schleifvorgang bewirkt. Zudem muss beim Schälschleifen nicht mehr der gesamte Schleifvorgang in einen Schrupp- und Schlichtvorgang unterteilt werden. Ein Vorteil des Schälschleifens besteht daher darin, dass die Zeiten zum Wechsel der Schleifscheiben verringert werden können. Das Schälschleifen ist erst Ende der neunziger Jahre in der industriellen Anwendung bekannt geworden.

Weit verbreitet und längst bekannt ist dagegen das Rundschleifen durch Einstechschleifen und Pendelschleifen. Hierbei arbeiten die Schleifscheiben vor allem mit ihrer Umfangsfläche, und die radiale Zustellung erfolgt schrittweise, also in mehreren Stufen, wobei zwischen dem Schrupp- und dem Schlichtvorgang unterschieden werden muss. Beim Einstechschleifen und beim Pendelschleifen sind IN-Prozessmess- und Prozesssteuerungen zur Führung der Schleifprozesse bekannt.

Ein Beispiel hierfür zeigt die US 5 371 975 A. Beim Rundschleifen von Walzen mittels einer rotierenden Schleifscheibe wird der Außendurchmesser der Walze auf Istmaß gemessen. Das gemessene Istmaß wird fortlaufend automatisch auf ein vorgegebenes Sollmaß korrigiert. Das Istmaß wird im Bereich des Angriffs der Schleifscheibe am Werkstück gemessen, und die Schleifscheibe sowie der Messfühler können gemäß einer Ausführungsform in einer Ebene zueinander liegen. Zusätzlich ist bei diesem bekannten Verfahren auch eine Einrichtung zur Temperaturmessung im Bereich des Eingriffs von Schleifscheibe und Walze vorgesehen. Dadurch können temperaturbedingte Verformungen der Walze beim Schleifvorgang berücksichtigt und bei der rechnerischen Auswertung innerhalb des Regelvorgangs auf die spätere Betriebstemperatur umgerechnet werden. Das Schleifaufinaß wird daher in einem solchem Maße abgetragen, dass bei der später herrschenden Betriebstemperatur eine gewünschte Abmessung und Verformung der Walze vorliegt.

Das Verfahren gemäß der US 5 371 975 A ist auf den Vorgang des Rundschleifens abgestellt, bei dem die radiale Zustellung in mehreren Stufen erfolgt und die Teilvorgänge des Schrupp- und Schlichtschleifens ablaufen. Dieser stufenweise Ablauf des Schleifvorganges kommt einem Verfahren zur Prozessführung entgegen, bei dem Abweichungen vom Sollmaß nach oben und unten durch ständiges Nachkorrigieren in beiden Richtungen auf das Sollmaß ausgeglichen werden. Hinweise auf das Schälschleifen sind der US 5 371 975 A nicht zu entnehmen.

Beim Schälschleifen hingegen ist ein echte IN-Prozessmessung und Prozesssteuerung deshalb bisher nicht realisierbar gewesen, da der beim Schälschleifen zu erzeugende Außendurchmesser eines Werkstückes in einem Längshub geschliffen wird und somit keine wesentlichen Zwischenschritte über eine Messsteuerung erfasst werden, um danach noch den Endwert beeinflussen zu können.

Beim Schälschleifverfahren wurde daher bisher nur nach dem sogenannten POST-Prozessmess- und Prozesssteuer-Verfahren gearbeitet. Dies hat den Nachteil, dass der bereits geschliffene Außendurchmesser, z. B. ein Passungssitz, an dem in Bearbeitung befindlichen Werkstück nicht mehr nachkorrigierbar ist, wenn das Istmaß bereits auf Untermaß geschliffen worden ist.

Die Aufgabe der Erfindung besteht darin, ein Verfahren und eine Schleifmaschine zu schaffen, mittels welchem bzw. welcher während des Schälschleifens fortlaufend auf einen gewünschten zu schleifenden Durchmesser prozesssicher korrigiert werden kann, welches bzw. welche industriell einsetzbar ist und bei welchem bzw. welcher das für das IN-Prozessmess- und Prozesssteuer-Verfahren verwendete Messverfahren bzw. die dafür verwendete Messvorrichtung keine Verlängerung der Bearbeitungszeit erforderlich ist.

Diese Aufgabe wird durch ein Verfahren mit den Merkmalen gemäß Anspruch 1 und durch eine Schleifmaschine mit den Merkmalen gemäß Anspruch 8 gelöst. Zweckmäßige Weiterbildungen sind in den jeweiligen abhängigen Ansprüchen definiert.

Das erfindungsgemäße Verfähren gemäß Anspruch 1 stellt ein Verfahren zur Prozessführung beim Schälschleifen eines Werkstückes mittels Schleifscheibe auf einer Schleifmaschine dar, wobei das Werkstück während des Schleifens mittels eines Messfühlers permanent bzw. fortlaufend auf das vorliegende Istmaß gemessen wird und parallel, d. h. gleichzeitig, dazu das gemessene Istmaß fortlaufend automatisch auf ein vorgegebenes schleifzeitabhängiges Sollmaß korrigiert wird. Das heißt, die Korrektur des Istmaßes auf das zu erreichende Sollmaß auf der Basis des gemessenen Istmaßes erfolgt in Echtzeitsteuerung der Schleifmaschine, d. h. in einer IN-Prozesssteuerung. Dabei wird erst nach Erreichen des Sollmaßes das Werkstück in Längsrichtung mit einem bestimmten Vorschub gegenüber der Schleifscheibe verfahren. Durch eine derartige Echtzeitsteuerung wird vermieden, dass das zu schleifende Werkstück auf Untermaß geschliffen wird. Die Fehlerquote bei der Herstellung der Werkstücke kann dadurch erheblich reduziert werden. Des weiteren kann durch die Echtzeitsteuerung der Schleifvorgang aktiv so beeinflusst werden, dass der durch die Schleifscheibe in das Werkstück eingebrachte Wärmeeintrag reduziert bzw. optimiert wird, wodurch einerseits die wärmebedingten Verformungen am Werkstück, welche ebenfalls zu Ungenauigkeiten der Istmaße des Werkstückes führen können, reduzierbar sind und gleichzeitig auch der Schleifscheibenverschleiß verringerbar ist. Dadurch sind also insgesamt optimale Schleifbedingungen erzielbar.

Vorzugsweise wird das Sollmaß als zeitlich abhängige Sollwertkurve vorgegeben. Die zeitlich abhängige Sollwertkurve wird dabei in einer Speichereinheit, welche vorzugsweise Bestandteil der Maschinensteuerung ist, abgelegt. Entsprechend der Sollwertkurve wird dann nach permanenter bzw. fortlaufender Feststellung des jeweiligen Istmaßes eine Korrektur vorgenommen, so dass die Schleifscheibe sich so der Sollwertkurve in Abhängigkeit von der Schleifzeit nähert, dass die gewünschte Endkontur am Werkstück erzielt wird.

Das Istmaß wird unmittelbar im Bereich des Angriffs der Schleifscheibe am Werkstück gemessen. Unter "unmittelbar im Bereich des Eingriffs der Schleifscheibe" soll dabei verstanden werden, dass ein den Messwert in Form eines Messsignal ausgebender Messfühler im wesentlichen in einer Ebene angeordnet ist, welche durch den am Werkstück umlaufenden Eingriffspunkt der Schleifscheibe gebildet wird. Dadurch wird in vorteilhafter Weise erreicht, dass die Messung unmittelbar an der Stelle am Werkstück erfolgt, an welcher das Werkstück gerade geschliffen wird, so dass bei geringsten Abweichungen von der Sollwertkurve sofort über die Maschinensteuerung eine Korrektur in Richtung auf die Sollwertkurve zur Vermeidung von Untermaß vorgenommen werden kann.

Vorzugsweise wird das fortlaufend gemessene Istmaß als Messsignal an eine Maschinensteuerung übertragen, wobei auf der Basis dieses Messsignals dann die Korrektur auf das Sollmaß erfolgt. Dies entspricht einer Echtzeitsteuerung, welche auch als IN-Prozesssteuerung bezeichnet wird. Erfindungsgemäß ist somit ein Verfahren bereitgestellt, bei welchem eine IN-Prozesssteuerung beim Schälschleifen realisiert ist. Entsprechend diesem erfindungsgemäßen Verfahren wird während des Schleifens die Schleifscheibe auf einen Solldurchmesser des Werkstückes nachkorrigiert.

Entsprechend einer bestimmten zu schleifenden Kontur des Werkstückes wird dieses zumindest in einem Abschnitt zylindrisch oder konisch geschliffen. Das heißt, mit dem beschriebenen Verfahren ist es möglich, sowohl zylindrische als auch konische Werkstücke an deren Außenkontur auf eine definierte gewünschte Sollwertkurve mit höchster Genauigkeit zu schleifen.

Um sicherzustellen, dass die Messwerterfassung, auf deren Basis die Echtzeitsteuerung erfolgt, stets im Bereich des Eingriffs der Schleifscheibe bzw. in der durch den am Werkstück umlaufenden Eingriffspunkt der Schleifscheibe gebildeten Ebene verläuft, werden Schleifscheibe und Messfühler synchron zueinander am Werkstück bewegt. Entsprechend ist es natürlich auch möglich, dass Schleifscheibe und Messfühler feststehen und anstelle dessen das Werkstück bewegt wird. Auch in diesem Fall ist gewährleistet, dass Schleifscheibe und Messfühler zueinander so angeordnet sind, dass die Messwerterfassung sich auf den Punk am Werkstück bezieht, an welchem unmittelbar der Schleifvorgang stattfindet. Ein Abschalten der Maschine zum Zweck des Messvorgangs oder ein Entfernen der Schleifscheibe vom Werkstück zur Durchführung des Messvorganges ist bei dem erfindungsgemäßen Verfahren nicht erforderlich.

Gemäß Ansprüch 8 weist die erfindungsgemäße Schleifmaschine, welche zur Durchführung des oben beschriebenen Verfahrens dient, eine auf einem Schleifspindelstock gehaltene Schleifscheibe zum Schälschleifen eines Werkstückes, welches zwischen einer Werkstückspindel und einer Reitstockspindel gehalten ist, einen Messfühler zum Erfassen einer gerade geschliffenen Werkstückabmessung und eine Maschinensteuerung auf. Erfindungsgemäß ist der Messfühler in einer durch den am Werkstück umlaufenden Eingriffsbereich der Schleifscheibe gebildeten Ebene angeordnet, wobei während des Schälschleifens fortlaufend Messsignale an die Maschinensteuerung zuführbar sind, welche ihrerseits auf der Basis dieser Messsignale die Schleifscheibe so steuert, dass der Schleifvorgang als IN-Prozesssteuerung ausführbar ist. Dabei ist die Maschinensteuerung derart ausgebildet, dass nach Erreichen des Sollmaßes in der durch den Eingriffsbereich der Schleifscheibe gebildeten Ebene das Werkstück in Längsrichtung mit einem bestimmten Vorschub gegenüber der Schleifscheibe verfahren wird. Mit der erfindungsgemäßen Vorrichtung ist es somit möglich, unmittelbar während des Schleifvorgangs ohne Zeitverzögerung, d. h. in Echtzeitsteuerung, den Schleifvorgang, d. h. die Art und Weise des Eingriffes der Schleifscheibe am Werkstück, derart zu beeinflussen, dass die gewünschte Endmaße des Werkstückes in engstmöglichem Toleranzbereich gehalten werden können, so dass ein Untermaß des Werkstückes, was in der Regel inakzeptabel ist, vermieden werden kann.

Gemäß einer Weiterbildung der Erfindung ist der Messfühler an einem Messkopf befestigt, welcher an dem Schleifspindelstock einschwenkbar angebracht ist. Durch das einschwenkbare Anbringen kann der Messkopf auf verschiedene Durchmesser des Werkstückes angepasst werden, wobei stets gewährleistet ist, dass der Messfühler am Messkopf so angeordnet ist, dass er sich stets in dem Bereich der durch den Eingriffspunkt der Schleifscheibe am Werkstück gebildete Ebene befindet. Gemäß einer bevorzugten Weiterbildung der Erfindung ist der Messfühler gegenüber dem Eingriffsbereich der Schleifscheibe am Werkstück angeordnet, d. h. vorzugsweise im wesentlichen 180° gegenüber dem Eingriffsbereich der Schleifscheibe. Es ist jedoch auch möglich, den Messfühler in einer bestimmten winkelmäßigen Entfernung des Werkstückes anzuordnen. Mit der erfindungsgemäßen Echtzeit-Prozeßsteuerung in Verbindung mit der Maschinensteuerung auf der Basis der erfaßten Istwerte, welche zur Korrektur der Sollwerte eingesetzt werden, ist es möglich, eine gewünschte Sollzylinderform oder Sollkonusform des Werkstückes zu erzeugen. Das bedeutet, daß das erfindungsgemäße Schälschleifen sowohl für zylindrische Werkstückformen bzw. Werkstückabschnitte als auch für konusförmige Werkstücke bzw. Werkstückabschnitte einsetzbar ist.

Weitere Vorteile, Merkmale und Anwendungsmöglichkeiten der Erfindung werden nun anhand von Ausführungsbeispielen unter Bezugnahme auf die beigefügte Zeichnung detailliert erläutert. Es zeigen:
- Fig. 1: die Draufsicht einer erfindungsgemäßen Schleifmaschine in schematischer Darstellung mit Angabe des unmittelbaren Schleitbereiches Y;
- Fig.2: einen Schnitt durch die in Fig. 1 angegebene Schnittebene A-A; und
- Fig. 3: die in Fig. 1 angegebene Detailansicht Y des Schleitbereiches in vergrößerter Darstellung.

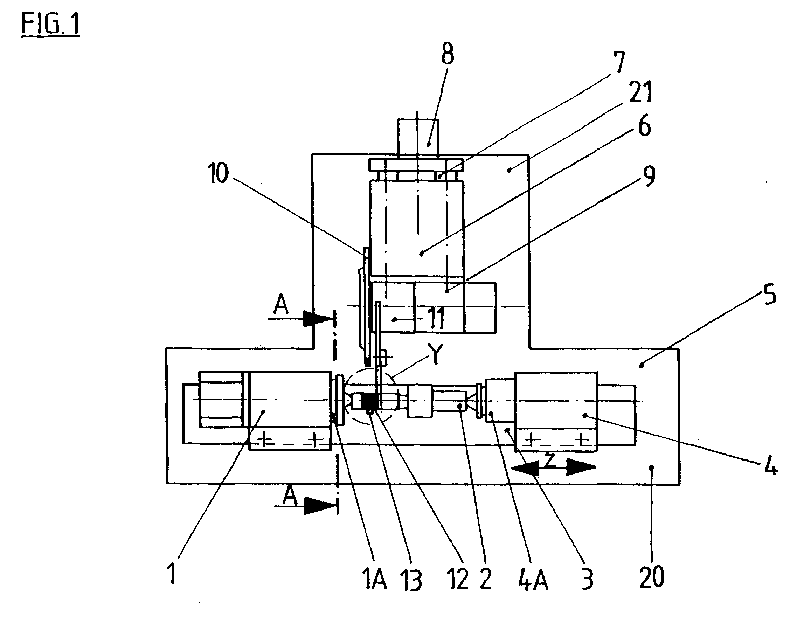

In Fig. 1 ist in schematischer Darstellung eine Draufsicht auf eine Außenrund-Schleifmaschine dargestellt, welche im Schälschleifverfahren (Umfangslängsschleifen) arbeitet. Für ein derartiges Schälschleifverfahren werden in axialer Richtung dünne CBN-Schleifscheiben mit verschleißfesten Bindungen verwendet. Die Besonderheit beim Schälschleifverfahren liegt darin, daß in der Regel das komplette Schleifaufmaß in einem Arbeitsgang im Längsschleifverfahren abgetragen wird. Dabei ist die radiale Zustellung der Schleifscheibe 10 während des Schleifens gleich dem radialen Schleifaufmaß auf dem Werkstück 2. In an sich bekannter Weise weist die Außenrund-Schleifmaschine einen Werkstückspindelstock 1 mit einer Werkstückspindel 1 A, einen Schleiftisch 3 und einen Reitstock 4 mit einer hydraulisch verschiebbaren Reitstockpinole 4A auf, welche auf einem Maschinenbett 5 angeordnet sind. Der Schleiftisch 3 ist im Vorderbereich 20 des Maschinenbettes 5 auf Führungen aufgebaut, auf welchen dieser in Richtung der CNC-Achse Z axial verfahrbar ist. Der motorische Antrieb dieser Achse ist nicht dargestellt. Der auf dem Schleiftisch 3 angeordnete Werkstückspindelstock 1 mit der Werkstückspindel 1A ist motorisch angetrieben, wobei die Werkstückspindel 1A auf ihrem vorderen Bereich eine Spitze zur Aufnahme und Übertragung der Rotationsbewegung auf das Werkstück 2 ausgebildet hat. Der Reitstock 4 mit der hydraulisch verschiebbaren Pinole 4A ist ebenfalls auf dem Schleiftisch 3 aufgebaut, wobei die Pinole 4A im vorderen Bereich eine Zentrierspitze zur Aufnahme des Werkstückes 2 ausgebildet hat. Zwischen den Spitzen der Werkstückspindel 1A und der Pinole 4A ist das Werkstück 2 eingespannt, wobei die Mittelachsen der Werkstückspindel 1A und der Reitstockpinole 4A sowie des Werkstückes 2 exakt fluchtend zueinander ausgerichtet sind.

Im Hinterbereich 21 des Maschinenbettes 5 ist ein Schleifspindelstock 6 aufgebaut. welcher hydrostatische Führungselemente zu dessen Lagerung aufweist. Die Zustellung in Richtung der CNC-Achse X, welche rechtwinklig zur Achse Z ausgerichtet ist, erfolgt mittels eines motorischen Antriebes 8. Im vorderen Bereich trägt das Gehäuse des Schleifspindelstocks 6 eine Schleifspindel 9, auf welcher die Schleifscheibe 10 aufgenommen ist.

Auf dem Gehäuse des Schleifspindelstockes 6 ist eine Meßvorrichtung 11 angebracht, welche einen Arm aufweist, welcher der Aufnahme eines Meßkopfes 12 zur Messung des Durchmessers des Werkstückes dient. Ein oder mehrere Meßfühler 13 zum Erfassen des Istdurchmessers des Werkstückes unmittelbar während der Schleitbearbeitung sind im Schleifbereich der Schleifscheibe 10 so angeordnet, daß stets der gerade geschliffene Durchmesser aktuell gemessen wird. Dadurch ist es möglich, den Meßwert unmittelbar während der Bearbeitung zu erfassen und dadurch den gerade zu schleifenden Durchmesser während des Prozesses noch, falls erforderlich, zu korrigieren. Dies bedeutet, daß nach diesem Meßverfahren eine Echtzeitsteuerung, d.h. eine IN-Prozeßsteuerung, auch für das Schälschleifen (Umfangslängsschleifen) ermöglicht ist.

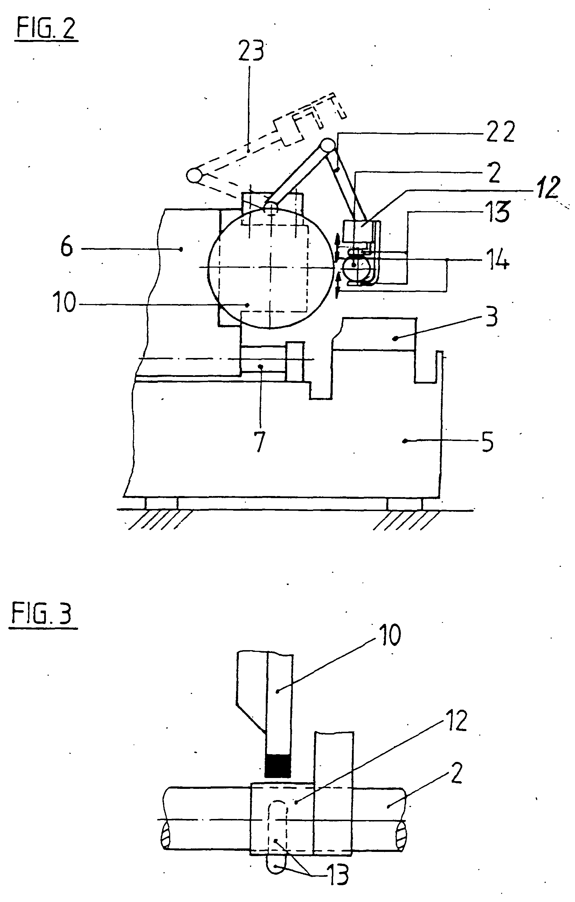

In Fig. 2 ist eine Seitenansicht in prinzipieller Darstellung entsprechend der Schnittebene A-A aus Fig. 1 dargestellt. Daraus ist ersichtlich, daß ein einschwenkbarer Arm 22, welcher den Meßkopf 12 mit den Meßfühlern 13 zur Erfassung des Durchmessers des zu schleifenden Werkstückes 2 trägt, auf dem Schleifspindelstock 6 aufgebaut ist. Mittels der Pfeile 14 ist der abtastbare Meßweg der Meßfühler 13 angedeutet. Die Bezugsziffer 23 bezeichnet die in der gestrichelten Position dargestellte Stellung des Armes 22 in zurückgeschwenkter bzw. ausgeschwenkter Stellung. In dieser zurückgeschwenkten Stellung kann das Werkstück 2 aus der Schleifmaschine entnommen werden, und es kann ein neues Werkstück eingespannt werden.

In Fig. 3 ist in vergrößerter Ansicht das Detail Y gemäß Fig. 1 dargestellt. Daraus ist ersichtlich, daß die Meßfühler 13 im wesentlichen gegenüber dem unmittelbaren Eingriffsbereich der Schleifscheibe 10 am Werkstück 2 angeordnet sind, wobei der Meßkopf 12 die jeweiligen bzw. im Falle, wenn nur ein Meßfühler 13 vorgesehen ist, den Meßfühler 13 trägt. Dadurch wird gewährleistet, daß stets der exakte gerade geschliffene Durchmesser des Werkstückes 2 gemessen wird und durch Zufuhr eines diesem Meßwert entsprechenden Meßsignals an die Maschinensteuerung eine Korrektur der Eingriffsposition der Schleifscheibe 10 derart vorgenommen werden kann, daß der Außendurchmesser des Werkstückes, welcher insbesondere ein Lagersitz sein kann, auf das gewünschte Sollmaß korrigiert wird.

Die Meßfühler 13 sind dabei bezüglich der Dicke der Schleifscheibe 10 gegenüberliegend dazu so angeordnet, daß der Meßwert unmittelbar hinter dem der Verschleißmarke (Verschleißkante) der Schleifscheibe folgenden eigentlichen Eingriffspunkt der Schleifscheibe angeordnet ist. Dies bedeutet, daß die Meßwerte auf einer Peripherielinie der Schleifscheibe gegenüberliegend der Schleifscheibe angeordnet sind.

Das Messen mittels der Meßfühler 13 erfolgt dabei in der Art, daß während des Zustellens der Schleifscheibe 10 an das Werkstück 10 fortlaufend gemessen wird. Sobald das Sollmaß erreicht ist, wird das Werkstück 2 in Längsrichtung gemäß dem Schälschleifverfahren mit einem bestimmten Vorschub verfahren. Dabei werden fortlaufend Meßwerte an die Maschinensteuerung übermittelt, so daß der zu schleifende Durchmesser des Werkstückes während des Schleifens fortlaufend korrigierbar ist. Je nach Ausführung des Gerätes ist es möglich, sowohl zylindrische als auch konische Außendurchmesser am Werkstück 2 zu schleifen.

Durch das erfindungsgemäße Meßverfahren sowie das Verfahren realisierender erfindungsgemäßer Schleifmaschinen kann somit beim Schälschleifen eine erheblich höhere Prozeßsicherheit als beim bisher im Stand der Technik bekannten POST-Prozeßsteuerungen erreicht werden. Gleichzeitig wird auch das thermische Verhalten von Schleifscheibe und Werkstück zueinander optimiert, da stets während des eigentlichen Schleifprozesses gemessen wird und Abweichungen vom Sollwert direkt und sofort kompensiert werden können.

## Patentansprüche

1. Verfahren zur Prozessführung eines Werkstückes mittels Schleifscheibe auf einer Schleifmaschine, wobei das Werkstück während des Schleifens mittels eines Messfühlers auf Istmaß gemessen, somit der gerade geschliffene Durchmesser des Werkstückes gemessen und zugleich das gemessene Istmaß fortlaufend automatisch auf ein vorgegebenes schleifzeitabhängiges Sollmaß korrigiert wird, **dadurch gekennzeichnet, dass** beim Schälschleifen nach Erreichen des Erreichen des Sollmaßes das Werkstück in Längsrichtung mit einem bestimmten Vorschub gegenüber der Schleifscheibe verfahren wird.

2. Verfahren nach Anspruch 1, **dadurch gekennzeichnet, dass** das Sollmaß als zeitlich abhängige Sollwertkurve vorgegeben ist.

3. Verfahren nach Anspruch 1 oder 2, **dadurch gekennzeichnet, dass** das Istmaß unmittelbar im Bereich des Angriffs der Schleifscheibe am Werkstück gemessen wird.

4. Verfahren nach einem der Ansprüche 1 bis 3, **dadurch gekennzeichnet, dass** das fortlaufend gemessene Istmaß als Messsignal an eine Maschinensteuerung übertragen wird, auf dessen Basis die Korrektur auf das Sollmaß erfolgt.

5. Verfahren nach einem der Ansprüche 1 bis 4, **dadurch gekennzeichnet, dass** das Werkstück zumindest in einem Abschnitt zylindrisch geschliffen wird.

6. Verfahren nach einem der Ansprüche 1 bis 4, **dadurch gekennzeichnet, dass** das Werkstück zumindest in einem Abschnitt konisch geschliffen wird.

7. Verfahren nach einem der Ansprüche 1 bis 6, **dadurch gekennzeichnet, dass** die Schleifscheibe und der Messfühler synchron zueinander am Werkstück bewegt werden oder dass die Schleifscheibe und der Messfühler fest zueinander angeordnet sind und das Werkstück sich dazu bewegt.

8. Schleifmaschine zur Durchführung des Verfahrens nach einem der Ansprüche 1 bis 7, welche eine auf einem Schleifspindelstock (6) gehaltene Schleifscheibe (10) zum Schälschleifen eines zwischen einer Werkstückspindel (1A) und einer Reitstockpinole (4A) gehaltenen Werkstückes, einen Messfühler (13) zum Erfassen einer geschliffenen Werkstückabmessung und eine Maschinensteuerung aufweist wobei der Messfühler (13) im wesentlichen in einer durch den am Werkstück umlaufenden Eingriffsbereich der Schleifscheibe (10) gebildeten Ebene angeordnet ist und während des Schälschleifens fortlaufend Messsignale zur Echtzeitsteuerung der Schleifmaschine an die Maschinensteuerung liefert, **dadurch gekennzeichnet, dass** die Maschinensteuerung derart ausgebildet ist, dass nach Erreichen des Sollmaßes in der durch den Eingriffsbereich der Schleifscheibe (10) gebildeten Ebene das Werkstück (4) in Längsrichtung mit einem bestimmten Vorschub gegenüber der Schleifscheibe (10) verfahren wird.

9. Schleifmaschine nach Anspruch 8, **dadurch gekennzeichnet, dass** der Messfühler (13) an einem Messkopf (12) befestigt ist, welcher an dem Schleifspindelstock (6) einschwenkbar ist.

10. Schleifmaschine nach Anspruch 8 oder 9, **dadurch gekennzeichnet, dass** der Messfühler (13) gegenüber dem Eingriffsbereich der Schleischeibe (10) am Werkstück (2) angeordnet ist.

11. Schleifmaschine nach einem der Ansprüche 8 bis 10, **dadurch gekennzeichnet, dass** die Maschinensteuerung die Schleifscheibe (10) so steuert, dass eine gewünschte Sollzylinderform des Werkstückes (2) erzeugbar ist.

12. Schleifmaschine nach einem der Ansprüche 8 bis 10, **dadurch gekennzeichnet, dass** die Maschinensteuerung die Schleifscheibe (10) so steuert, dass eine gewünschte Sollkonusform des Werkstückes (2) erzeugbar ist.

## Claims

1. Device (1) for handling valuable product mixtures (6), in particular for tearing up, distributing and transporting plastic sacks (5) filled with valuable products (8) and the valuable products (8) contained therein, whereby the device (1) comprises at least two conveyor means (2; 17, 18, 32, 48, 49, 50) arranged virtually parallel to one another which are driven by a drive (3) and perform opposite back and forth movements in at least two different directions in space (x or x', y or y'), whereby the conveyor means (2; 17, 18, 32, 48, 49, 50) move up and down and back and forth parallel to a conveyor device (x'), **characterised in that** the individual conveyor means (2; 17, 18, 32, 48, 49, 50) are in the form of a sword (17, 18, 32, 48, 49, 50) or group (33, 51) of swords (17, 18, 32, 48, 49, 50) and are so far spaced apart from one another that the valuable products (8) released from the plastic sacks (5) placed thereon fall at least partly between the conveyor means (2; 17, 18, 32, 48, 49, 50).

2. Device according to claim 1, **characterised in that** the directions of the movements of the conveyor means (2; 17, 18, 32, 48, 49, 50) are roughly perpendicular to one another.

3. Device according to one of the preceding claims, **characterised in that** the conveyor means (2; 17, 18, 32, 48, 49, 50) have two ends, whereby the drive (3) is preferably arranged at one end.

4. Device according to one of the preceding claims, **characterised in that** the conveyor means (2; 17, 18, 32, 48, 49, 50) are mounted eccentrically and rotatably on a shaft (27, 28) in different positions with a respective first bearing point (23, 25) and with a second bearing point (24, 26) are guided eccentrically and rotatably or rotatably and displaceably or in a supported manner.

5. Device according to one of the preceding claims, **characterised in that** the conveyor means (2; 17, 18, 32, 48, 49, 50) are connected respectively with a lifting means (36) and a pushing means (37), whereby the lifting/pushing means (36, 37) is preferably in the form of a hydraulic cylinder (38, 39, 40, 41) and/or pneumatic cylinder.

6. Device according to one of the preceding claims, **characterised in that** the lifting or pushing means (36, 37) is in the form of a connecting rod driven by an eccentric disc, which is coupled pivotably onto the conveyor means (2; 17, 18, 32, 48,49,50).

7. Device according to one of the preceding claims, **characterised in that** the sword (17, 18, 32, 48, 49, 50) comprises on at least one upwards pointing side (19) gripping and/or tearing means (20) such as teeth, hooks and blades.

8. Device according to claim 7, **characterised in that** the gripping and/or tearing means (20) are arranged on a carrier (35) which is preferably secured by means of at least one rapid clamping device on the conveyor means (2; 17, 18, 32, 48, 49, 50).

9. Device according to one of the preceding claims, **characterised in that** on the conveyor means (2; 17, 18, 32, 48, 49, 50) or in the vicinity of the conveyor means (2; 17, 18, 32, 48, 49, 50) at least one nozzle is arranged, which is preferably operated by compressed air and/or water, whereby the nozzle is directed to intermediate spaces between the conveyor means (2; 17, 18, 32, 48, 49, 50) and an adjacent conveyor means (2; 17, 18, 32, 48, 49, 50) and/or the gripping and/or tearing means (20).

10. Device according to one of the preceding claims, **characterised in that** preferably conveyor means (2) or swords (17, 18, 32, 48, 49, 50) from different groups (33, 51) are arranged next to one another.

11. Device according to one of the preceding claims, **characterised in that** the swords (17, 18, 32, 48, 49, 50) are designed to have an essentially rectangular shape with for example a length of 2m, a rear width of 20 mm and height of 20 cm.

12. Device according to one of the preceding claims, **characterised in that** on a frame (3) or a storage device (4) of the device (3) retaining fingers (12) are arranged via springs (11) and/or elastic elements, which in a front region (I) of the conveyor means (2; 17, 18, 32, 48, 49, 50) form a barrier (13) lying over the conveyor means (2; 17, 18, 32, 48, 49, 50).

## Revendications

1. Dispositif (1) pour le traitement de mélanges de matières valorisables (6), en particulier pour le déchiquetage, la répartition et le transport de sacs plastiques (5) remplis de matières valorisables (8) et des matières valorisables (8) qu'ils contiennent, le dispositif (1) présentant au moins deux moyens de transfert (2 ; 17, 18, 32, 48, 49, 50) pour l'essentiel parallèles l'un à l'autre, entraînés par un moyen d'entraînement (3) et qui exécutent des mouvements contraires de va-et-vient dans au moins deux directions spatiales différentes (x ou x', y ou y'), les moyens de transfert (2 ; 17, 18, 32, 48, 49, 50) se déplaçant vers le haut et vers le bas à peu près parallèlement à une direction de transfert (x') et vers l'avant et vers l'arrière,
**caractérisé en ce que**
les différents moyens de transfert (2 ; 17, 18, 32, 48, 49, 50) sont en forme d'épée (17, 18, 32, 48, 49, 50) ou de groupe (33, 51) d'épées (17, 18, 32, 48, 49, 50) et sont chacun à une distance telle l'un de l'autre que les matières valorisables (8) dégagées des sacs plastiques (5) passant dessus tombent au moins en partie entre les moyens de transfert (2 ; 17, 18, 32, 48, 49, 50).

2. Dispositif selon la revendication 1,
**caractérisé en ce que**
les directions des mouvements des moyens de transfert (2 ; 17, 18, 32, 48, 49, 50) sont approximativement perpendiculaires.

3. Dispositif selon l'une quelconque des revendications précédentes,
**caractérisé en ce que**
les moyens de transfert (2 ; 17, 18, 32, 48, 49, 50) présentent deux extrémités, le moyen d'entraînement (3) étant disposé de préférence à l'une des extrémités.

4. Dispositif selon l'une quelconque des revendications précédentes,
**caractérisé en ce que**
les moyens de transfert (2 ; 17, 18, 32, 48, 49, 50) sont dans différentes positions, avec chacun un premier point d'appui (23, 25) sur un arbre (27, 28) de façon excentrique et pivotante et ils sont guidés, avec chacun un deuxième point d'appui (24, 26) de façon excentrique et pivotante ou pivotante et déplaçable ou soutenue.

5. Dispositif selon l'une quelconque des revendications précédentes,
**caractérisé en ce que**
les moyens de transfert (2 ; 17, 18, 32, 48, 49, 50) sont chacun en liaison avec un moyen de levage (36) et un moyen pousseur (37), le moyen de levage/pousseur (36, 37) étant, de préférence, un vérin hydraulique (38, 39, 40, 41) et/ou vérin pneumatique.

6. Dispositif selon l'une quelconque des revendications précédentes,
**caractérisé en ce que**
le moyen de levage respectivement pousseur (36, 37) est conçu en tant que bielle, entraînée par un disque d'excentrique, qui est couplée au moyen de transfert (2 ; 17, 18, 32, 48, 49, 50) de manière articulée en rotation.

7. Dispositif selon l'une quelconque des revendications précédentes,
**caractérisé en ce que**
l'épée (17, 18, 32, 48, 49, 50) présente, au moins sur un côté (19) tourné vers le haut, des moyens de préhension et/ou de déchiquetage (20) tels que des dents, des crochets et des couteaux.

8. Dispositif selon la revendication 7,
**caractérisé en ce que**
les moyens de préhension et/ou de déchiquetage (20) sont disposés sur un support (35) fixé sur le moyen de transfert (2 ; 17, 18, 32, 48, 49, 50) de préférence au moyen d'au moins un dispositif de serrage rapide.

9. Dispositif selon l'une quelconque des revendications précédentes,
**caractérisé en ce que**
sur le moyen de transfert (2 ; 17, 18, 32, 48, 49, 50) ou à proximité du moyen de transfert (2 ; 17, 18, 32, 48, 49, 50), est disposée au moins une buse qui fonctionne de préférence avec de l'air comprimé et/ou de l'eau, la buse étant alignée sur les espaces entre le moyen de transfert (2 ; 17, 18, 32, 48, 49, 50) et un moyen de transfert voisin (2 ; 17, 18, 32, 48, 49, 50) et/ou sur les moyens de préhension et/ou de déchiquetage (20).

10. Dispositif selon l'une quelconque des revendications précédentes,
**caractérisé en ce que**
de préférence, le moyen de transfert (2) ou l'épée (17, 18, 32, 48, 49, 50) de différents groupes (33, 51) sont disposés côte à côte.

11. Dispositif selon l'une quelconque des revendications précédentes,
**caractérisé en ce que**
les épées (17, 18, 32, 48, 49, 50) ont essentiellement la forme d'un parallélépipède avec, par exemple, une longueur de 2 m, une largeur arrière de 20 mm et une hauteur de 20 cm.

12. Dispositif selon l'une quelconque des revendications précédentes,
**caractérisé en ce que**
des tiges de retenue (12), qui forment, dans une zone avant (I) des moyens de transfert (2 ; 17, 18, 32, 48, 49, 50), une barrière (13) située au-dessus des moyens de transfert (2 ; 17, 18, 32, 48, 49, 50), sont disposées sur un cadre (31) ou un réservoir (4) du moyen (3) par l'intermédiaire de ressorts (11) et/ou d'éléments élastiques.
